# EUROPEAN PATENT SPECIFICATION

(11) **EP 3 784 083 B1**
(45) Date of publication and mention of the grant of the patent: **11.05.2022**
(21) Application number: 19716949.3
(22) Date of filing: 16.04.2019
(51) Int. Cl.: A41D 31/02, A41D 13/015

(54) **METHOD FOR PROVIDING A PADDING**
VERFAHREN ZUR BEREITSTELLUNG EINER POLSTERUNG
PROCÉDÉ DE FOURNITURE D'UN REMBOURRAGE

(30) Priority: 24.04.2018 IT 201800004806
(43) Date of publication of application: 03.03.2021
(73) Proprietor: Cannon & Macintosh Investment Limited, Valletta, VLT 0001 (MT)
(72) Inventor: GARGANO, Francesco, 35000 SLAVONSKI BROD (HR)
(74) Representative: Modiano, Micaela Nadia
(86) International application number: PCT/EP2019/059825
(87) International publication number: WO 2019/206745

(56) References cited:
- US-A1- 2017 273 386
- US-A1- 2018 098 589

## Description

The present invention relates to a method for providing a padding that can be used for example to provide products such as protective wear for parts of the human body in continuous contact for example with sports gear, equipment in general, or having the function of insoles for shoes; in all these cases such padding acts as protection from vibrations and from micro-traumas, and to increase comfort in the event of protracted contact over time. US 2017/273386 A1 discloses a method for providing a padding according to the preamble of claim 1.

The same paddings, provided in a desired hardness, can also act as protection for the human body in the event of impacts or falls, such as with knee-pads for volleyball, clothing for motorcyclists, or for sports like American football or rugby.

Such products usually comprise a padding which is a flexible and elastic layer, to which a polyurethane foam, for example is added.

Reinforcement paddings with variable thickness can then be added to the product, and these can be combined together to perform functions of protecting desired areas of the body.

One of the problems known nowadays is the effect known as "hardening of the edges of the padding": in fact, during the manufacture of the products, the padding is "joined" along its perimeter with another material, which can be done in two ways: by stitching or by thermoforming, in which the entire perimeter of the edge of the padding is compressed and permanently deformed by using heat (at about 200°C), and the padding is squashed against the other material and anchored with a thermo-adhesive film.

Considering that in the squashed zones the thickness is reduced, it can be seen how these "joining seams" harden the product and can create a nuisance for the user.

Furthermore, conventional paddings are usually made using polyurethane foams, which have multiple drawbacks, such as a high cost of production which entails the generation of scraps or discarded material during such production, such material being categorized by Italian law as hazardous waste; the high consumption of CO₂; a high cost of transport owing to the volume occupied by such foams; the use of glues or film adhesives which, with washing and use of the product with which the paddings are associated, are subject to deterioration with consequent delamination or detachment; a reduction over time of the elasticity characteristic of the material after continual use or washing, with consequent necessity to replace the entire product with which the paddings are associated; excessive localized heating owing to chafing which for example occur during use of the product with which such paddings are associated; possible skin irritations owing to the use of adhesives; difficulty in drying the product with which the paddings are associated owing to their intrinsic property of absorbing water or sweat; and finally a difficulty in obtaining, for the same padding, zones with different load-bearing capacity which can be obtained by varying the density of the foam or its thickness but which worsen the wearability, for example, of the product.

The aim of the present application is therefore to solve the above mentioned technical problems, eliminating the drawbacks in the cited known art and hence providing a method for obtaining a padding, in particular, but not exclusively, in order to provide protection for parts of the human body in continuous contact for example with sports gear or equipment in general, or having the function of insoles for shoes or acting as protection for the human body, such as knee-pads for volleyball or clothing for motorcyclists, or for sports like American football or rugby, which makes it possible to obtain an excellent and specific protection for the user and a comfort that is constant over time.

Within the above aim, an object of the invention is to provide a method for providing, in particular, a padding of the type belonging to or constituting a protection for parts of the human body in continuous contact for example with sports gear or equipment in general, or having the function of insoles for shoes or acting as protection for the human body, such as knee-pads for volleyball or clothing for motorcyclists, or for sports like American football or rugby, which improves environmental sustainability by eliminating the use of adhesives and reducing the use of CO₂.

Another object is to obtain a method that, in addition to the above characteristic, adds that of eliminating the production of scraps or discarded material during the production of the corresponding product, and which is simple to carry out.

Another object is to obtain a method that makes it possible to reduce the production times of the paddings.

Another object is to provide a method that makes it possible to obtain a padding that withstands the stresses to which the product with which it is associated is subjected, and which also maintains its elasticity characteristics, even after multiple washes, and which has rapid drying times.

Another object is to obtain a method that makes it possible to obtain paddings with high breathability.

Another object is to provide a method that makes it possible to obtain a padding that has contained encumbrances and volumes for transport and a reduced overall weight.

Another object is to obtain a method that makes it possible to obtain paddings that do not retain heat and which do not overheat during their use.

Another object is to provide a method that makes it possible to obtain a padding that does not generate any kind of allergy in contact with the skin.

Another object is to obtain a method that makes it possible to provide paddings at low cost.

Another object is to obtain a method that can be carried out with the usual conventional systems.

This aim and these and other objects which will become better apparent hereinafter are achieved by a method for providing a padding, which is characterized in that it uses 3D printing by depositing a filament according to a microarchitecture that entails the definition of superimposed matrices that are adapted to define a structure composed of individual open cells, which are mutually connected and arranged mutually opposite and side by side, each one having a shape in plan view with a variable diameter which is obtained by way of superimposing elements that are substantially shaped like a truncated pyramid or like a truncated cone with a polygonal base.

Further characteristics and advantages of the invention will become better apparent from the following description which is illustrated by way of non-limiting example in the accompanying drawings, wherein:

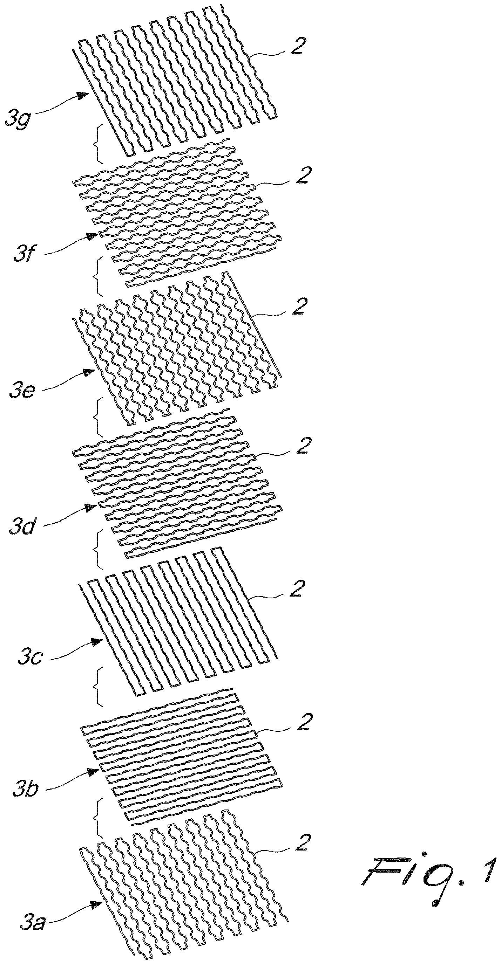

Figure 1 is an exploded view, in order to render the method more intelligible, of the deposition of the first seven layers of material using different colors for a better identification thereof, including in subsequent figures;

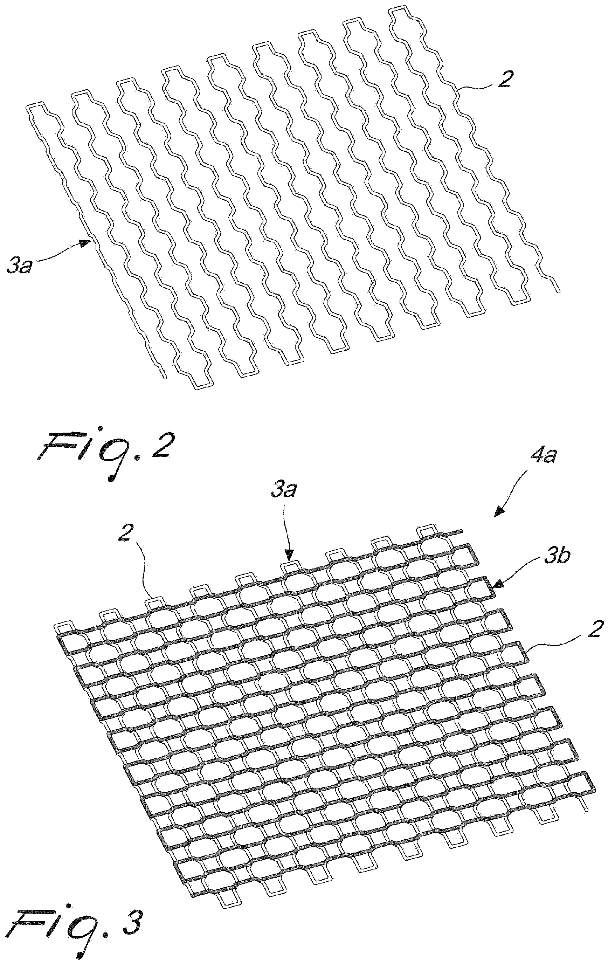

Figure 2 shows the deposition of a first layer;
Figure 3 shows the deposition of a second layer on the first layer, to define a first matrix;

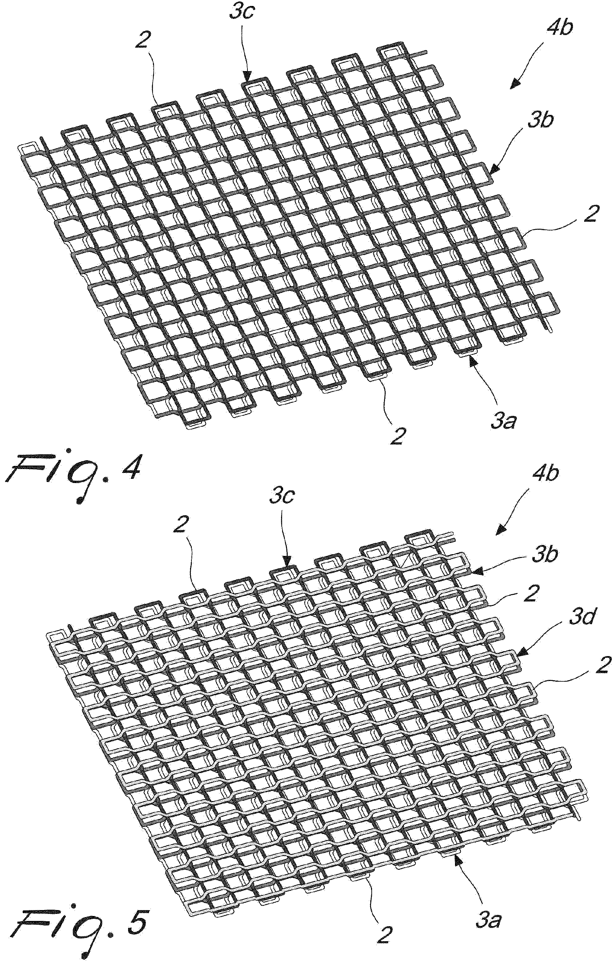

Figure 4 shows the deposition of a third layer on the two preceding layers, to define a second matrix;
Figure 5 shows the deposition of a fourth layer on the three preceding layers, to define a third matrix;

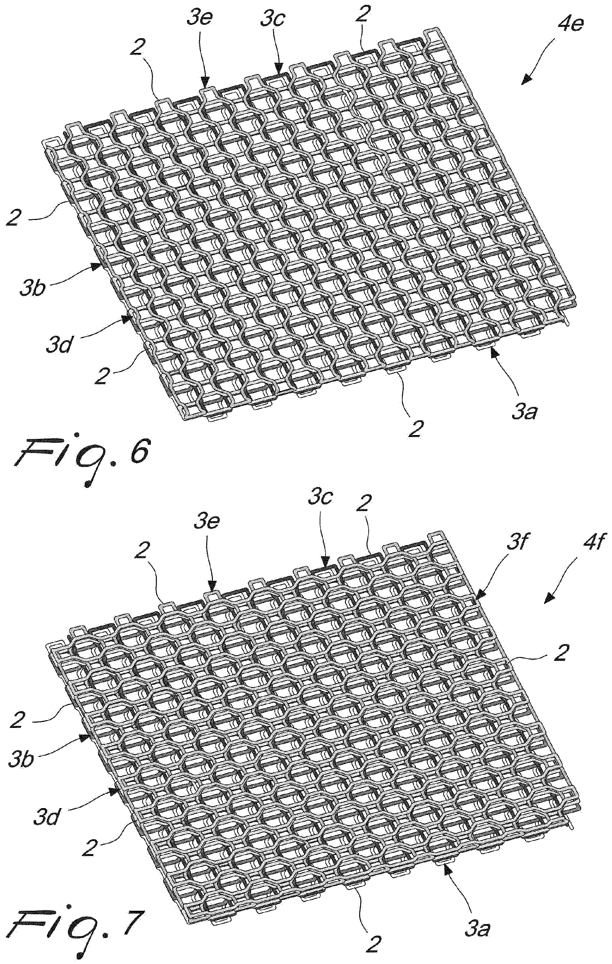

Figure 6 shows the deposition of a fifth layer on the four preceding layers, to define a fourth matrix;
Figure 7 shows the deposition of a sixth layer on the five preceding layers, to define a fifth matrix;

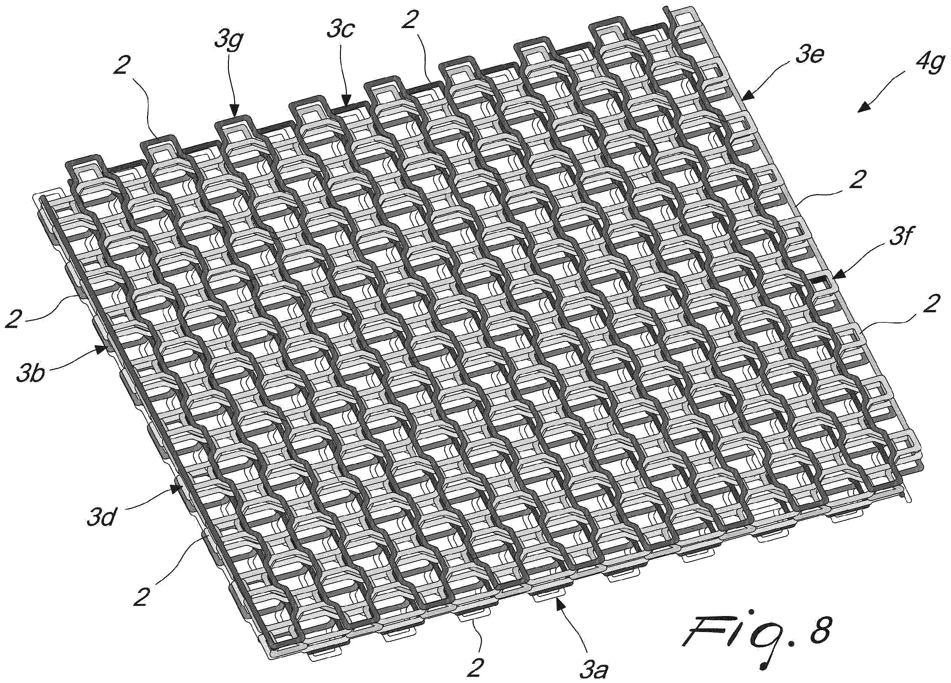

Figure 8 shows the deposition of a seventh layer on the six preceding layers, to define a sixth matrix;
Figure 9 is a perspective view of a series of a desired number of cells, defining the padding, which are obtained with the method;

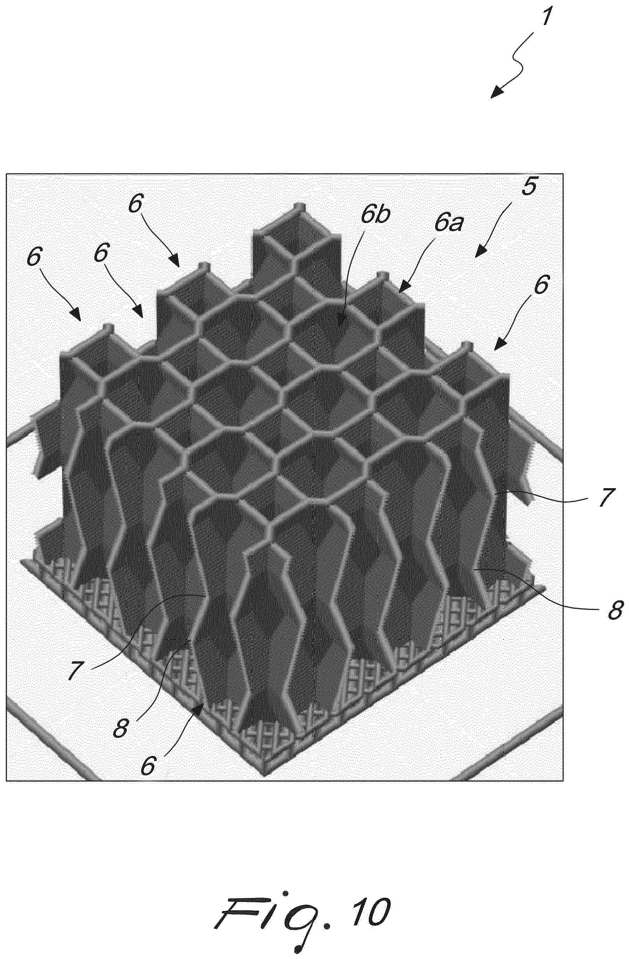

Figure 10 is a partially cross-sectional view of Figure 9.

In the embodiments illustrated below, individual characteristics shown in relation to specific examples may in reality be interchanged with other, different characteristics, existing in other embodiments.

With reference to the figures, the method for providing a padding 1 is illustrated, in particular a padding of the type belonging to or constituting a protection for parts of the human body in continuous contact for example with sports gear or equipment in general, or having the function of insoles for shoes or acting as protection for the human body, such as knee-pads for volleyball or clothing for motorcyclists, or for sports like American football or rugby.

The method can use one of the various conventional methods of 3D printing, as their principal differences lie in the way that the various layers are printed.

One conventional method of 3D printing consists of a system for printing material by extrusion, in which the printer creates one layer at a time, spreading for example a layer of powder (plaster or resins) and using the inkjet head to print a binder in the transverse cross-section of the part.

The process is repeated until such time as all the layers have been printed so as to obtain the product of the desired shape.

It is also known to use materials that are fused or softened in order to produce, with multiple depositions, the various layers, for example Selective Laser Sintering (SLS) and Fused Deposition Modeling (FDM).

It is also known to deposit liquid materials which are hardened with various technologies.

For providing ultra-thin configurations, it is known to use the two-photon photopolymerization 3D micro fabrication technique, in which the desired 3D object is traced in a block of gel by a concentrated laser, the gel being hardened to a solid at the points where the laser has been concentrated.

Once the 3D printing method and the material that constitutes the filament 2 and its diameter have been chosen, as a consequence taking into consideration a series of technical parameters for using the chosen material, such as, for example, the temperature, the deposition speed, and the type of nozzle to use, all of which can modify the physical characteristics of the final product, the method carries out a deposition of a filament 2 according to a very precise microarchitecture.

Of all the materials available today, the material indicated here for the deposition printing of filament, by way of non-limiting example, is distinguished by the FlexMark 8 trademark.

Naturally the materials used may be more relevant according to specific requirements.

The accompanying figures give an example illustration of only the first seven layers 3a, 3b, 3c, 3d, 3e, 3f, 3g, which are layers that are colored differently from each other in order to identify them more easily.

The specific microarchitecture chosen for the deposition of the layers entails the definition of various matrices, for example for the first seven layers identified in sequence with the numerals 4a, 4b, 4c, 4d, 4e, 4f, which, as they are formed, are mutually superimposed and adapted to define a structure 5 composed of individual open cells 6, which are mutually connected and arranged mutually opposite and side by side.

The peculiarity of the chosen microarchitecture is that it obtains a series of open cells 6 each one of which has a shape in plan view with a diameter that varies as the cell extends upward.

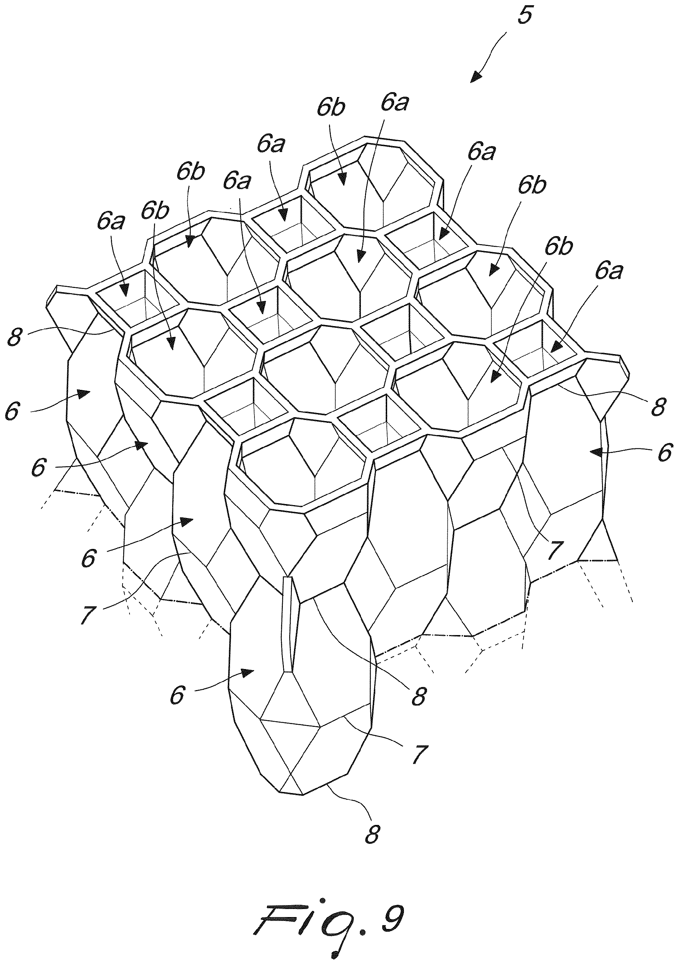

As shown in the accompanying figures, each open cell 6 is obtained by depositing, in sequence, layers of filament 2 which, starting for example from the first layer 3a, has a given geometry which, in the subsequent second layer 3b, has in plan view a slightly larger dimension, and so the layers grow until, as shown in Figure 9, the point or plane 7 of maximum dimension is reached.

Starting from such point or plane 7, the dimensions of the subsequent layers tend to decrease until the point or plane 8 is reached which presents, in plan view, the minimum dimension.

Then the dimension of the layers starts to increase again until a new point or plane 7 is reached which presents, in plan view, the maximum dimension.

Advantageously, but not exclusively, the height of the cell between the points or planes 7 and 8 is identical.

The microarchitecture creates many adjacent and mutually superimposed cells 6; advantageously it is possible to offset the adjacent open cells so that the point or plane 7 of maximum dimension in plan view of a row of open cells 6a corresponds to the point or plane 8 of minimum dimension in plan view of the adjacent row of open cells 6b, as shown in Figure 9.

The geometry of the various layers is such as to obtain the superimposition of elements or open cells 6 that are substantially shaped like a truncated pyramid or like a truncated cone with a polygonal base, by way of example with an octagonal base.

In the specific embodiment shown, the layers are deposited by generating matrices which, if one performs a transverse cross-section on the resulting product, show a sequence of elements which have, in plan view, a substantially square and octagonal shape and the sides of which are shared with those of the adjacent cells.

For a truncated cone shape with a polygonal, for example circular, base, the layers are deposited by generating matrices which, if one performs a transverse cross-section on the resulting product, show a sequence of elements which have, in plan view, a substantially circular shape with mutually tangent sides.

In this case the microarchitecture generates individual open cells 6, each of which has a shape in space which can be likened substantially to the shape of a cask, having zones that are more or less free from material between adjacent cells.

The shape and the superimposition of the individual layers is obviously carried out taking into account the shape of the product that it is desired to obtain; to provide a padding 1, in particular a padding of the type belonging to or constituting a protection for parts of the human body in continuous contact for example with sports gear or equipment in general, or having the function of insoles for shoes or acting as protection for the human body, such as knee-pads for volleyball or clothing for motorcyclists, or for sports like American football or rugby, it is possible for example to obtain a single zone of constant hardness or for example a flat first outer perimetric zone with a very low thickness of the cells 6, for example tending toward zero, followed by a second zone with a uniform thickness of the cells 6, for example two millimeters.

Then a third zone can follow, with a thickness of the cells 6 that increases from the perimeter toward the center and a thickness that decreases from the center toward the perimeter.

Then a fourth zone can come next, which surrounds the third zone with a thickness of the cells 6 that exceeds that of the third zone.

Alternatively the padding can have one or more zones with a determined and desired hardness grade, using appropriate materials and parameters, which result in a product that is useful to obtain for example protection for the human body in the event of impacts or falls, such as with knee-pads for volleyball, clothing for motorcyclists, or for sports like American football or rugby.

Thus it has been found that the invention fully achieves the intended aim and objects, a method having been obtained that makes it possible for example to obtain a padding, in particular, but not exclusively, in order to obtain a protection for parts of the human body in continuous contact for example with sports gear or equipment in general, or having the function of insoles for shoes or acting as protection for the human body, such as knee-pads for volleyball or clothing for motorcyclists, or for sports like American football or rugby, which has one or more zones of constant thickness and/or differentiated thickness according to the specific requirements of the user so as to obtain an optimal and specific protection and a comfort that are constant over time, while at the same time improving environmental sustainability given that it eliminates the use of adhesives and reduces the use of CO₂.

The particular chosen shape of the microarchitecture and therefore of the cells makes it possible to achieve the characteristic of having an elastic bounce-back once a pressure thereon has ceased, the arrangement of the layers making it possible to obtain a desired density, load-bearing capacity and thickness at every desired point of the product that it is desired to obtain.

Furthermore the chosen shape of the microarchitecture makes it possible to have an optimal wearability of the corresponding product, with an elastic bounce-back being obtained in every direction of the padding.

The use of the particular microarchitecture indicated makes it possible in fact to obtain products with deformable zones that at the same time are controlled and, owing to different heights of the cells, are also differentiated so as to increase the overall performance (protection and comfort) of the product and this given that the microarchitecture indicated makes it possible to obtain a product that has characteristics, such as density, load-bearing capacity, breathability, flexibility/elasticity, and weight, which are not determined solely by the type of material used, but by the intrinsic shape of the microarchitecture.

The method further makes it possible to eliminate the production of scraps or discarded material during the production of the product and in particular of paddings, which are structurally adapted to optimally withstand the stresses to which for example the pair of cycling shorts with which they are associated are subjected.

The paddings thus obtained therefore keep their elasticity constant over time, even after multiple washes; they have rapid drying times, high breathability, contained encumbrances and volumes for transport, and reduced overall weight; and they do not trap heat, they do not overheat during use, they do not generate any type of allergy in contact with the skin, and they are of low cost.

The particular microarchitecture that defines the cells, which each have a shape in plan view with a variable diameter which is obtained by way of superimposing elements that are substantially shaped like a truncated pyramid or like a truncated cone with a polygonal base, is therefore useful in a wide range of products, such as a very soft version for a golfing glove, changing to a medium-firm version for an insole of a running shoe, up to rather hard version for a knee-pad for volleyball or the shoulders of a rugby jersey.

Finally it should be noted that the method can also be used to provide, in conjunction or separately, other parts that make up the padding or even other parts that can be combined with the padding 1, and which have, for the various parts, different desired characteristics and performance, for example of load-bearing capacity, in one or more desired points or zones.

This increase of load-bearing capacity is obtained for example by keeping the same microarchitecture, but applying a change in the filling, for example using the same pattern while reducing its dimensions so as to have more material and less empty space.

Naturally the materials used as well as the dimensions of the individual components of the invention, such as the flat first outer perimetric zone, the second zone, the third zone, the fourth zone, the fifth zones may be more relevant according to specific requirements.

This application claims priority from Italian Patent Application No. 102018000004806

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for providing a padding (1), using 3D printing **characterized by** depositing a filament (2) according to a microarchitecture that entails the definition of superimposed matrices that are adapted to define a structure composed of individual open cells (6), which are mutually connected and arranged mutually opposite and side by side, each one having a shape in plan view with a variable diameter which is obtained by way of superimposing elements that are substantially shaped like a truncated pyramid or like a truncated cone with a polygonal base.

2. The method according to claim 1, **characterized in that** said microarchitecture entails the definition of various matrices which, as they are formed, are mutually superimposed and adapted to define a structure (5) which is composed of said individual open cells (6), which are mutually connected and arranged mutually opposite and side by side, each one of said open cells (6) having, in plan view, a diameter that varies as each one of said cells (6) extends upward.

3. The method according to one or more of the preceding claims, **characterized in that** said microarchitecture defines cells (6) which are obtained by depositing in sequence layers of filament (2) which have a given geometry which, in the succession of layers, has in plan view a slightly larger dimension until a point or plane (7) of maximum transverse dimension is reached.

4. The method according to claim 3, **characterized in that** starting from said point or plane (7) the dimensions in plan view of the subsequent layers tend to decrease until a point or plane (8) of minimum transverse dimension is reached, the dimension in plan view of the subsequent layers returning to increase until a new point or plane (7) of maximum transverse dimension is reached.

5. The method according to claim 4, **characterized in that** said microarchitecture creates a plurality of open cells (6) which are mutually superimposed and in which one cell adjacent to another cell is offset so that said point or plane (8) of minimum transverse dimension in plan view of the adjacent row of open cells (6b) corresponds to said point or plane (7) of maximum transverse dimension in plan view of a row of open cells (6a).

6. The method according to one or more of the preceding claims, **characterized in that** with said microarchitecture the superimposition is obtained of elements or open cells (6) which are substantially shaped like a truncated pyramid with an octagonal base, said layers being deposited by generating matrices which, if one performs a transverse cross-section on the resulting product, show a sequence of elements which have, in plan view, a substantially square and octagonal shape and the sides of which are shared with those of the adjacent cells.

7. The method according to one or more of claims 1-5, **characterized in that** with said microarchitecture it is obtained the superimposition of elements or open cells (6) which are substantially shaped like a truncated cone with a polygonal or circular base, said layers being deposited by generating matrices which, if one performs a transverse cross-section on the resulting product, show a sequence of elements which have, in plan view, a substantially circular shape with mutually tangent sides so as to generate individual open cells (6), each of which has a shape in space which can be likened substantially to the shape of a cask, having zones that are more or less free from material between adjacent cells.

8. The method according to claims 4 or 5, **characterized in that** the height of each individual open cell (6) between said points of minimum transverse dimension (7) and maximum transverse dimension (8) is identical.

## Patentansprüche

1. Ein Verfahren zur Bereitstellung einer Polsterung (1) durch 3D-Druck, **gekennzeichnet durch** Auflegen eines Fadens (2) entsprechend einer Mikroarchitektur, die das Bestimmen übereinandergelegter Matrizes beinhaltet, welche ausgebildet sind, um eine Struktur zu bestimmen, die aus einzelnen offenen Zellen (6) zusammengesetzt ist, welche miteinander verbunden und einander gegenüber und nebeneinander angeordnet sind, wobei jede im Grundriss eine Form mit veränderlichem Durchmesser hat, die gewonnen wird durch das Übereinanderlegen von Elementen welche im Wesentlichen wie ein Pyramidenstumpf oder ein Kegelstumpf mit vieleckiger Basis geformt sind.

2. Das Verfahren gemäß Anspruch 1, **dadurch gekennzeichnet, dass** die Mikroarchitektur das Bestimmen verschiedener Matrizes beinhaltet, welche während sie geformt werden übereinandergelegt werden und ausgebildet sind, um eine Struktur (5) zu bestimmen, welche aus den einzelnen offenen Zellen (6) zusammengesetzt ist, welche miteinander verbunden und einander gegenüber und nebeneinander angeordnet sind, wobei jede der offenen Zellen (6) im Grundriss einen Durchmesser hat, der mit der Erstreckung der Zellen (6) nach oben variiert.

3. Das Verfahren gemäß einem oder mehreren der obigen Ansprüche, **dadurch gekennzeichnet, dass** die Mikroarchitektur Zellen (6) bestimmt, die gebildet werden durch das sequenzielle Ablegen von Fadenschichten (2), die eine bestimmte Geometrie haben, welche in der Folge der Schichten im Grundriss eine etwas größere Abmessung hat bis ein Punkt oder eine Ebene (7) maximaler transversaler Abmessung erreicht ist.

4. Das Verfahren gemäß Anspruch 3, **dadurch gekennzeichnet, dass** ausgehend von dem Punkt oder der Ebene (7) die Abmessungen im Grundriss der aufeinanderfolgenden Schichten tendenziell abnehmen bis ein Punkt oder eine Ebene (8) minimaler transversaler Abmessung erreicht ist, wobei die Abmessung im Grundriss der aufeinanderfolgenden Schichten wieder zunimmt, bis ein neuer Punkt oder eine neue Ebene (7) maximaler transversaler Abmessung erreicht ist.

5. Das Verfahren gemäß Anspruch 4, **dadurch gekennzeichnet, dass** die Mikroarchitektur eine Vielzahl offener Zellen (6) erzeugt, die übereinandergelegt ist und in der eine Zelle, die an eine andere Zelle angrenzt, so versetzt ist, dass der Punkt oder die Ebene (8) minimaler transversaler Abmessung im Grundriss der benachbarten Reihe offener Zellen (6b) dem Punkt oder der Ebene (7) maximaler transversaler Abmessung im Grundriss einer Reihe offener Zellen (6a) entspricht.

6. Das Verfahren gemäß einem oder mehreren der obigen Ansprüche, **dadurch gekennzeichnet, dass** bei der Mikroarchitektur das übereinanderlegen von Elementen oder offenen Zellen (6) durchgeführt wird, die im Wesentlichen wie ein Pyramidenstumpf mit achteckiger Basis geformt sind, wobei die Schichten durch das Erzeugen von Matrizes abgelegt werden, welche bei Durchführen eines transversalen Querschnitts im resultierenden Produkt eine Folge von Elementen aufweisen, die im Grundriss eine im Wesentlichen quadratische und achteckige Form haben und die ihre Seiten mit benachbarten Zellen gemeinsam haben.

7. Das Verfahren gemäß einem oder mehreren der Ansprüche 1-5, **dadurch gekennzeichnet, dass** bei der Mikroarchitektur das Übereinanderlegen von Elementen oder offenen Zellen (6) durchgeführt wird, die im Wesentlichen wie ein Kegelstumpf mit vieleckiger oder kreisförmiger Basis geformt sind, wobei die Schichten abgelegt werden durch das Erzeugen von Matrizes, welche beim Durchführen eines transversalen Querschnitts im resultierenden Produkt eine Folge von Elementen aufweisen, die im Grundriss im Wesentlichen eine Kreisform mit zueinander tangenten Seiten haben, um einzelne offene Zellen (6) zu erzeugen, die jeweils eine räumliche Form haben, welche im Wesentlichen der Form einer Tonne ähnlich ist, mit Zonen, die mehr oder weniger frei von Material zwischen benachbarten Zellen sind.

8. Das Verfahren gemäß Anspruch 4 oder 5, **dadurch gekennzeichnet, dass** die Höhe jeder einzelnen offenen Zelle (6) zwischen den Punkten der minimalen transversalen Abmessung (7) und der maximalen transversalen Abmessung (8) identisch ist.

## Revendications

1. **Procédé pour fournir un rembourrage (1), utilisant l'impression 3D, caractérisé par le dépôt d'un filament (2) suivant une microarchitecture qui entraîne la définition de matrices superposées qui sont adaptées pour définir une structure composée de cellules ouvertes individuelles (6), qui sont mutuellement reliées et agencées mutuellement opposées et côte à côte, chacune ayant une forme en vue de dessus avec un diamètre variable qui est obtenue au moyen d'éléments en superposition qui sont pratiquement formés comme une pyramide tronquée ou comme un cône tronqué avec une base polygonale.**

2. **Procédé selon la revendication 1, caractérisé en ce que ladite microarchitecture entraîne la définition de diverses matrices qui, à mesure qu'elles sont formées, sont mutuellement superposées et adaptées pour définir une structure (5) qui est composée desdites cellules ouvertes individuelles (6), qui sont mutuellement reliées et agencées mutuellement opposées et côte à côte, chacune desdites cellules ouvertes (6) ayant, en vue de dessus, un diamètre qui varie à mesure que l'une desdites cellules (6) s'étend vers le haut.**

3. **Procédé selon une ou plusieurs des revendications précédentes, caractérisé en ce que ladite microarchitecture définit des cellules (6) qui sont obtenues en déposant, les unes à la suite des autres, des couches de filaments (2) qui ont une géométrie donnée qui, par la succession de couches, a en vue de dessus une dimension légèrement plus grande jusqu'à ce qu'un point ou plan (7) de dimension transversale maximale soit atteint.**

4. **Procédé selon la revendication 3, caractérisé en ce qu'à partir dudit point ou plan (7), les dimensions en vue de dessus des couches subséquentes tendent à diminuer jusqu'à ce qu'un point ou un plan (8) de dimension transversale minimale soit atteint, la dimension en vue de dessus des couches subséquentes recommençant à augmenter jusqu'à ce qu'un nouveau point ou plan (7) de dimension transversale maximale soit atteint.**

5. **Procédé selon la revendication 4, caractérisé en ce que ladite microarchitecture crée une pluralité de cellules ouvertes (6) qui sont mutuellement superposées et dans laquelle une cellule adjacente à une autre cellule est décalée de sorte que ledit point ou plan (8) de dimension transversale minimale en vue de dessus de la rangée adjacente de cellules ouvertes (6b) correspond audit point ou plan (7) de dimension transversale maximale en vue de dessus d'une rangée de cellules ouvertes (6a).**

6. **Procédé selon une ou plusieurs des revendications précédentes, caractérisé en ce que ladite microarchitecture permet d'obtenir la superposition d'éléments ou de cellules ouvertes (6) qui sont sensiblement formés comme une pyramide tronquée avec une base octogonale, lesdites couches étant déposées en générant des matrices qui, si on réalise une coupe transversale sur le produit résultant, présentent une séquence d'éléments qui ont, en vue de dessus, une forme sensiblement carrée et octogonale et dont les côtés sont partagés avec ceux des cellules adjacentes.**

7. **Procédé selon une ou plusieurs des revendications 1 à 5, caractérisé en ce que ladite microarchitecture permet d'obtenir la superposition d'éléments ou de cellules ouvertes (6) qui sont sensiblement formés comme un cône tronqué avec une base polygonale ou circulaire, lesdites couches étant déposées en générant des matrices qui, si on réalise une coupe transversale sur le produit résultant, présentent une séquence d'éléments qui ont, en vue de dessus, une forme sensiblement circulaire avec des côtés mutuellement tangents de manière à générer des cellules ouvertes individuelles (6), dont chacune a une forme dans l'espace qui peut sensiblement s'apparenter à la forme d'un fût, ayant des zones qui sont plus ou moins exemptes de matière entre des cellules adjacentes.**

8. **Procédé selon les revendications 4 ou 5, caractérisé en ce que la hauteur de chaque cellule ouverte individuelle (6) entre lesdits points de dimension transversale minimale (7) et de dimension transversale maximale (8) est identique.**
